# EUROPEAN PATENT APPLICATION

(11) **EP 1 918 625 A1**
(43) Date of publication of application: **07.05.2008**
(21) Application number: 06731056.5
(22) Date of filing: 04.04.2006
(51) Int. Cl.: F16L 33/22

(54) **CONNECTOR FOR CONNECTING HOSES**

(30) Priority: 04.07.2005 JP 2005194904; 25.10.2005 JP 2005310335
(71) Applicant: Nippon Flex Co., Ltd, Nagoya-shi, Aichi 460-0003 (JP); Toyox Co., Ltd., Kurobe-shi Toyama 9380806 (JP)
(72) Inventor: FUKUSHIMA, Kazutaka, c/o NIPPON FLEX CO., LTD, Nagoya-shi, Aichi 460-0003 (JP); FUKUYA, Kenichi, c/o NIPPON FLEX CO., LTD, Nagoya-shi, Aichi 460-0003 (JP)
(74) Representative: Baumgärtel, Gunnar
(86) International application number: PCT/JP2006/307108
(87) International publication number: WO 2007/004343

(57) **Abstract**

A connector for connecting a hose or a tube according to the present invention is constituted by a nipple (1), into which the hose (100) can be inserted, a cap nut (10), an inner member (2), a cap (5) and a tapered washer (7), wherein projections (5b) are formed on an outer periphery of the cap (5), a groove (5c) is formed between the projections (5b), and a protrusion (2b) that can engage with an inner periphery of the hose (100) is formed on the inner member (2) or a tubular member (21) in a position corresponding to the projections formed on the outer periphery of the cap.

## Description

### FIELD OF THE INVENTION

The present invention relates to connectors used for connecting hoses or tubes that are made of synthetic resin, etc.

### BACKGROUND OF THE INVENTION

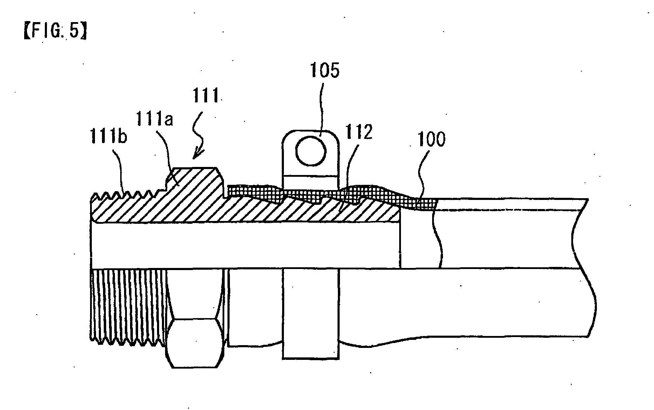

As shown in FIG. 5, in a known connector for connecting hoses, a nipple 111 as a tubular member is formed with a rotational head portion 111a for a spanner at the middle portion and is formed with an apparatus thread 111b for attaching an apparatus on the outer periphery on the left side of the rotational head portion 111a. On the other hand, a bamboo shoot-like tubular member 112 is formed on the outer periphery on the right side of the rotational head portion. 111a, and the outer diameter of the bamboo shoot-like tubular member 112 is set to be able to be fitted into an inner diameter of a hose 100 so as to serves as a resisting member against removal. A hose band 105 that is well known tightens this connector. [0002a] Here, the construction of this connector is well known, and therefore, listing of documents is omitted because it does not need to do.

### DISCLOSURE OF THE INVENTION

### PROBLEM TO BE SOLVED BY THE INVENTION

Tightening by the hose band 105 as described above does not uniformly tighten the outer periphery of the hose 100, and therefore, this may lead to cause leakage.

For this reason, the outer diameter of the bamboo shoot-like tubular member 112 is set to be larger than the inner diameter of the hose 100. Therefore, when the hose 100 is to be fitted to the bamboo shoot-like tubular member 102, the fitting is possible because the hose 100 may expand in the direction of the outer diameter in the case that the hose 100 is a soft one, but the fitting is not possible when the hose 100 is made of hard material. In view of this, a method of softening the end portion of the hose 100 by hot water or the like and then fitting the hose 100 has been used, but this requires troublesome fitting and removing operations.

Therefore, the present invention provides a hose connector that can eliminate the above inconvenience.

### MEANS FOR SOLVING THE PROBLEM

A connector for connecting a hose according to claim 1 of the present invention includes, a nipple, into which the hose can be inserted, and a cap nut engaging the nipple. With this connector, the cap nut, a tapered washer, a cap and an inner member constituting connector components are preset to an end portion of the hose, and the hose with the connector components set is inserted into the aforementioned nipple and is tightened through engagement between the nipple and the cap nut. In addition, with this connector, projections (5b) are formed on an outer periphery of the aforementioned cap (5), a groove (5c) is formed between the projections (5b), and additionally a protrusion (2b) that can engage with an inner periphery of the hose (100) is formed on the inner member (2) or a tubular member (21) in a position corresponding to the projections (5b) formed on the outer periphery of the cap (5).

With the connector having this construction, when the cap nut 10 is rotated after engagement with the nipple 1, V-shaped deformation is resulted due to the projections 5b and the groove 5c, and the projections 5b apply pressing forces from the outer peripheral side of the hose 110 in a direction toward the central axis to establish a compressed state, so that it is possible to prevent leakage. In addition, the protrusion (2b) that can engage with the inner periphery of the hose (100) is formed on the inner member (2) or a tubular member (21) in a position corresponding to the projections (5b) formed on the outer periphery of the cap (5), and therefore, due to extension of the protrusions (5b), the protrusion (2b) engages with the inner periphery of the hose for the purpose of preventing removal.

With the connector for connecting a hose according to claim 2, the tubular member (21) extends on the right side of the nipple (1) so as to be able to be fitted with an inner diameter of the hose, and an insertion hole (60), into which the hose can be inserted, is formed in an outer peripheral side of the tubular member (21), so that the inner member is formed integrally with the nipple (1), and therefore, it is not necessary to set an inner member as an additional member, and the setting operation can be facilitated.

With the connector for connecting a hose according to claim 3, an irregular portion 5d that can engage with an outer-periphery of the hose 100 is formed on an inner periphery of the cap 5A in a position corresponding to the projections 5b formed on the outer periphery of the cap 5A, and therefore, the projections 5b may be brought into contact with the outer periphery of the compressed hose 100, and additionally, the irregular portion 5d formed on the inner periphery to correspond to the projections 5b of the cap may engage with the outer periphery of the hose 100, so that it is possible to further prevent the removal.

With the connector for connecting a hose according to claim 4, a tapered portion 1d having a bore diameter narrowing in a left direction along a central axis is formed on the middle of the inner periphery of the nipple 1, into which the hose 100 can be inserted, and therefore, a contact portion 5a of the cap 5 may closely contact with the tapered portion 1d formed within the nipple, and additionally, the inner diameter of the contact portion 5a of the cap may constrict to contact with the outer diameter of the inner member 2, so that it is possible to prevent leakage.

With the connector for connecting a hose according to claim 5, a flange portion 2a is formed on the left side of the inner member 2, and a groove for an O-ring 12 is formed in the flange portion, and therefore, it is possible to prevent leakage by the O-ring 12.

A connector for connecting a hose according to claim 6 utilizes a cap that incorporates at least one of forming an inclined portion 5x on an end portion of a cap 5B formed with projections 55b and a recessed groove 55c between the projections 55b and forming slits 30, which have a length to extend from an inlet into inside by a small distance, around the outer periphery of a right end portion of a cap 5D.

A connector for connecting a hose according to claim 7 utilizes an inner member that is formed with a rectangular cross sectional groove 22c and protrusions 22b.

### ADVANTAGES OF THE INVENTION

With the connector for connecting a hose according to claim 1, it is possible to conveniently connect the hose due to the projections 5b formed on the outer periphery of the cap 5 and the protrusion 2b formed on the inner member 2 or the tubular member 21, and additionally, it is possible to prevent leakage and removal.

With the connector for connecting a hose according to claim 2, because the inner member 2 is formed integrally with the nipple 1, it is not necessary to set the inner member as an additional component, so that the setting operation can be facilitated.

With the connector for connecting a hose according to claim 3, the irregular portion 5d formed on the cap 5 may engage with the hose 2, and therefore, it is possible to prevent removal of the hose.

With the connector for connecting a hose according to claim 4, a tapered portion is included and therefore it is possible to prevent leakage.

With the connector for connecting a hose according to claim 5, it is possible to prevent leakage because the O-ring is mounted on the flange portion at the left end portion of the inner member 2.

With the connector for connecting a hose according to claim 6, by the formation of the inclined portion 5x at the end portion of the cap 5B, and by the taper washer 7 and the nipple 1 having configurations conforming to the inclined portion 5x, it is possible to prevent leakage with more closely contact condition. Alternatively, by forming the slits 30 to extend in a left direction from the right end portion of the cap 5D, it is possible to easily tighten the outer periphery of the hose 100 and to improve the removal preventing performance.

With the connector for connecting a hose according to claim 7, the inner 2A is formed with the rectangular protrusions 22b and groove 22c, and therefore, it is possible to effectively engaging the hose 100.

### BRIEF DESCRIPTION OF THE DRAWINGS

[FIG. 1] (A) is a front sectional view of a connector before assembling and (B) is a front sectional view of the connector after assembling.
[FIG. 2] A view showing the components.
[FIG. 3] A view showing a front sectional view of a connector for connecting a hose according to a second embodiment.
[FIG. 4] (A) is a front sectional view of a nipple 1A, (B) is a front sectional view of a cap 5A, and (C) is a front sectional view after assembling.
[FIG. 5] A front sectional view showing a connecting condition of a known connector.
[FIG. 6] (A), (B) and (C) show views of caps 5B to 5D, and (D) and (E) are views of inner members 2A and 2B.

### DESCRIPTION OF NUMERALS

- 1,1A: nipple

- 1a: rotational head portion
- 1d: tapered portion
- 1e: tapered portion
- 2, 2A, 2B: inner member
- 2a: flange portion
- 2b, 22b: projection
- 2c, 22c: groove
- 5, 5A, 5B, 5C, 5D: cap
- 5b, 55b: protrusion
- 5c, 55c: groove
- 5d: irregular portion
- 7: tapered washer
- 7b: inclined portion
- 10: cap nut
- 11: O-ring
- 21: tubular member
- 60: insertion hole
- 100: hose

### BEST MODE FOR CARRYING OUT THE INVENTION

Hose connectors are taken as connectors of the present embodiments and will be described with reference to the drawings.

### (FIRST EMBODIMENT)

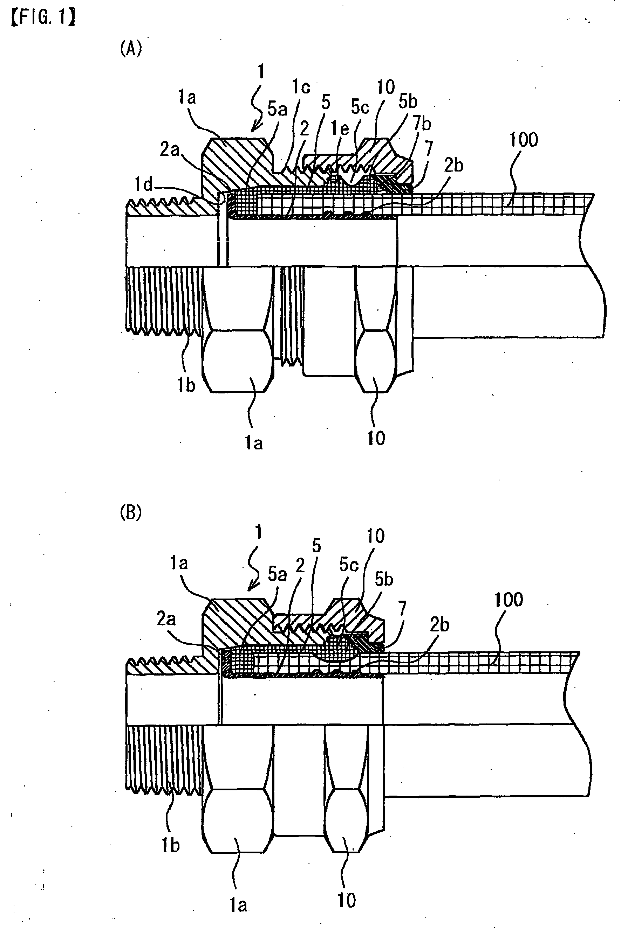

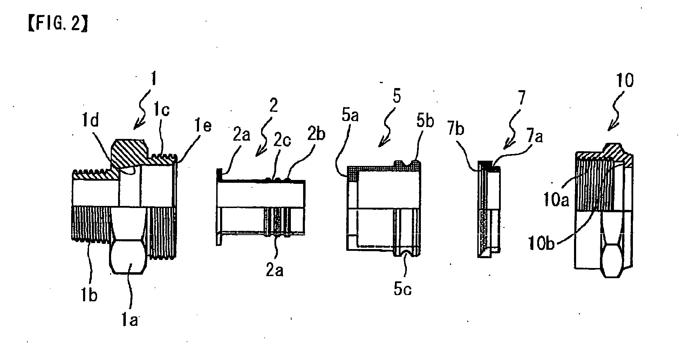

FIG. 1(A) is a front sectional view of a connector before assembling, FIG. 1(B) is a front sectional view of the connector after assembling, and FIG. 2 is a view showing the components.

On the outer periphery of substantially the middle portion of a tubular nipple 1, that is made of metal, etc., a rotational head portion 1a for a spanner is formed, and an apparatus screw 1b for attaching an apparatus is formed on the left side of the rotational head portion 1a.

On the other hand, on the outer periphery on the right side of the rotational head portion 1a, a nut thread 1c is formed for engaging with a cap nut 10 that is made of metal, hard resin, etc.

A method of attaching the apparatus to the left side of the nipple 1 may be that of a type using the apparatus thread 1b or binding by a band or the like and may be suitably adapted depending on the type of the apparatus.

Further, a tapered portion 1d is formed in the middle portion of the inner periphery of the nipple 1 and has a bore diameter narrowing in a left direction along the central axis of cap 5 (that will be explained later) is inserted. On the other hand, a tapered portion 1e is formed in the right end portion (inlet) of the nipple 1 and is inclined to have such a bore diameter that decreases in a left direction (a direction from the inlet toward the inner side) in order that projections 5b formed on the outer periphery of the cap 5, which will be described later, can contact and press against it in the direction along the central axis.

An inner member 2 is a tubular member having a flange portion 2a on the outer periphery at its left end portion and is made of metal in order that it can bear with minimum deformation against the pressing force applied by the cap 5 in the direction of the inner diameter (toward the central axis), however, the inner member 2 may be made of material other than metal.

In addition, on the outer periphery on the right side of the inner member 2, three raised protrusions 2b are formed in positions to correspond to the projections 5b and a recessed groove 5c formed on and in the aforementioned cap 5, and recessed grooves (roots) 2c are formed between the protrusions 2b. The number of the protrusions 2b and the number of the grooves 2c can be suitably chosen.

Further, the cap 5 is a tubular member formed by a resilient member made of rubber, etc., and a contact portion 5a is formed on the left end portion of the cap 5 and is formed with a small bore diameter at its opening, so that the contact portion 5a can contact with the flange portion 2a of the inner member 3 and can stop the hose 100 when the hose 100 has been inserted into the cap 5.

Here, the inner diameter of the cap 5 is set such that a bore diameter enables the sliding movement relative to the outer diameter of the hose 100. Further, two raised projections 5b are formed on the outer periphery of the right end portion of the cap 5, and a recessed groove (root) 5c is formed between the projections 5b. The number of the projections 5b and the number of the groove 5c can be suitably chosen.

Further, on the inner periphery of the cap 5, a fine irregular portion 5d is formed in a position corresponding to the projections 5b and may engage with the hose 100 in order to prevent removal of the same.

A tapered washer 7 is a tubular member made of synthetic resin, metal, etc., and is manufactured to have such a bore diameter that enables the sliding movement relative to the outer periphery of the hose 100. In addition, a stepped portion 7a is formed on the outer periphery of the right side of the tapered washer 7 and can contact with a pressing portion 10b formed on the cap nut 10 as will be explained later, whereas a stepped inclined portion 7b is formed on the left side of the inner periphery of the tapered washer 7 to have such a bore diameter that gradually decreases along the central axis in the right direction and can contact with the projections 5b of the cap 5 in order to press and break the same.

Further, a thread 10a is formed on the inner periphery of the cap nut 10 for engaging with the nut thread 1c formed on the nipple 1, and the pressing portion 10b that can contact with the stepped portion 7a formed on the tapered washer 7 is formed on the right side of the thread 10a.

A method of connecting the connecter, which is constructed as described above, to the hose will now be described.

First, the cap nut 10, the tapered washer 7, the cap 5 and the inner member 2 that are the connector components are inserted with the end portion of the hose 100, and the hose 100 with the connector components inserted therewith is then inserted into the nipple 1.

Then, the cap nut 10 that engages with the nut thread 1c formed on the nipple 1 is rotated, so that the cap nut 10 moves leftward by the thread action, and additionally, the tapered washer 7 is moved leftward by the pressing portion 10b of the cap nut 10 so as to press against the projections 5b of the cap 5. At this stage, the projections 5b are gradually compressed from their outer peripheral sides so as to be deformed to configure a V-shape by the projections 5b and the groove 5c.

Further, the tapered portion 1e is formed to be inclined such that the bore diameter decreases in the left direction (a direction from the inlet toward the inner side), and the inclined portion 7b on the left side of the inner periphery of the tapered washer 7 is formed to be inclined such that the bore diameter gradually decreases in the right direction along the central axis. Therefore, the tapered portion 1e on the right side of the nipple 1 and the inclined portion 7b of the tapered washer 7 may contact at their outer peripheral side with the inner peripheral region broadened, and therefore, a space having a substantially triangular cross section is defined at the outer periphery of the hose 100.

Here, if the projections 5b are formed such that their volume is greater than the volume of the aforementioned space having the triangular cross section, the projections 5b may protrude from the space to extend in the direction along the central axis, because it is not possible to protrude in the direction of outer peripheral side; and therefore, the projections 5b may press against the outer periphery of the hose 100 and may be compressed so as to be brought to a close contact condition therewith, so that leakage can be prevented.

On the other hand, due to the pressing force in a direction toward the central axis of the hose 100, the protrusions 2b formed on the inner member 2. may engage with the inner peripheral surface of the hose 100, so that the removal of the hose 100 can be prevented.

Here, the inner member 2 is inserted into the inner diameter side of the hose 100 in order to prevent the hose 100 from being crushed by the pressing force that may act to cause constriction toward the side of the central axis of the hose 100.

As described above, by rotating the cap nut 10, the projections 5b and the groove 5c may be deformed to form a V-shape, therefore, the tightening torque may be reduced and it is possible to improve the workability.

In addition, as the cap nut 10 is tightened after engagement with the nipple 1, the cap 5 may move in the left direction, resulting in that the contact portion 5a formed on the left end portion of the cap 5 closely contacts with the tapered portion 1d formed within the nipple 1, so that it is possible to prevent leakage.

Further, in addition to the situation that the contact portion 5a closely contacts with the tapered portion 1d, the inner diameter of the contact portion 5a decreases to closely contact with the outer diameter of the inner member 2, and therefore, it is possible to prevent leakage.

As described above, by the construction including the nipple 1, the inner member 2, the cap 5, the tapered washer 7 and the cap nut 10, and by rotating the cap nut 5, the hose 100 can be conveniently connected and it is possible to prevent removal of the hose and to prevent leakage.

### (SECOND EMBODIMENT)

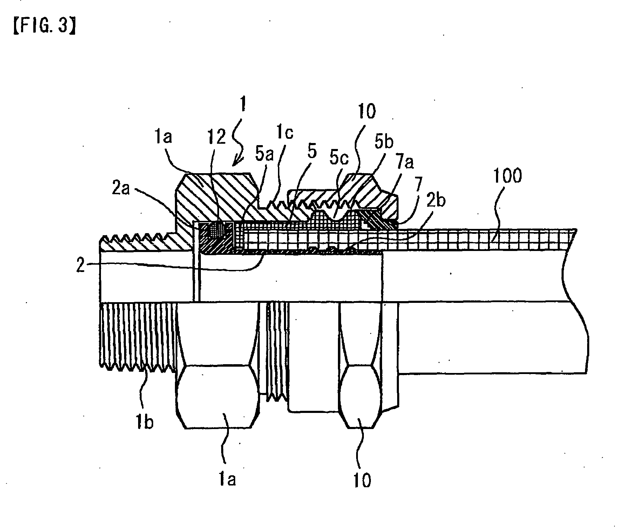

The description will now be made with reference to FIG. 3 that shows a front sectional view of a connector for connecting a hose according to this embodiment. The connector for connecting the hose according to this embodiment is different from the first embodiment in the internal construction of the nipple 1 and the construction of the inner member 2 but is the same as the first embodiment in the other components, and therefore, the same components are labeled with the same reference numerals and their description will be omitted.

The nipple 1 does not have the tapered portion 1d but is straight with a uniform bore diameter starting from the inlet. In addition, with regard to the inner member 2, the flange portion 2a is formed to be thicker, a groove is formed in the flange portion 2a, and an O-ring 12 is fitted into the groove.

According to this embodiment, the connection of the hose 100 can be made in substantially the same manner as the first embodiment, and thus, the projections 5b and the groove 5c formed on and in the cap 5 may be deformed to form a V-shape, the pressing force is applied from the outer peripheral side of the hose 100 in the direction toward the central axis to establish a compressed state so as to bring the outer periphery of the hose 100 and the projections 5b to a closely contact state with each other. On the other hand, the protrusions 2b may engage with the inner peripheral surface of the hose 100, so that it is possible to prevent removal of the hose 100.

In addition, due to the pressing force applied by the cap 5 from the left direction, the O-ring 12 formed on the flange portion 2a is brought to a compressed state and extends toward the inner peripheral surface of the nipple 1 to closely contact therewith, so that it is possible to prevent leakage.

### (THIRD EMBODIMENT)

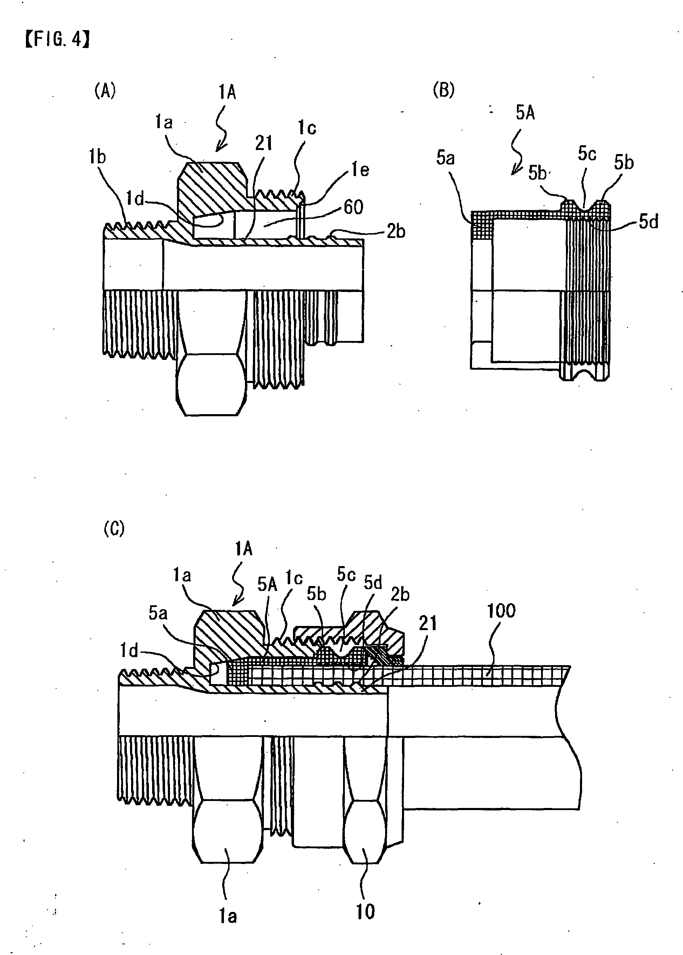

This embodiment will now be described with reference to FIG. 4(A) and (B). FIG. 4(A) is a front sectional view of a nipple 1A, FIG. 4(B) is a front sectional view of a cap 5A and FIG. 4(C) is a front sectional view in an assembled state.

The nipple 1A corresponds to the nipple 1 and the inner member 2A that are formed integrally with each other, and the components providing the same operations are labeled with the same reference numerals and their description will be omitted.

A tubular member 21 corresponding to the inner member 2 is disposed to extend on the right side of the nipple 1A such that it can be fitted into the inner diameter of the hose 100. In addition, on the outer peripheral side of the tubular member 21, the tapered portion 1d is formed to have a bore diameter narrowing in the left direction along the central axis as the cap 5A is inserted, and an insertion hole 60 into which the hose 100 can be inserted is formed.

In addition, on the aforementioned cap 5A, the irregular portion 5d is formed on the inner periphery in a position corresponding to the projections 5b that are formed on the outer periphery.

A method of connecting the connector having the above construction to the hose will now be described with reference to FIG. 4(C), whereas the configuration after assembling is substantially the same as the first embodiment, and therefore, it is not necessary to manufacture the inner member 2 as an additional component, and it is not necessary to assemble the inner member as an independent component, so that it is possible to save the trouble.

The cap nut 10 and the tapered washer 7 shown in FIG. 2, and the cap 5A are inserted in this order with the end portion of the hose 100, and the end portion of the hose 100 is inserted into the insertion hole 60a formed on the right side of the nipple 1A. Then, as the cap nut 10 is rotated, the pressing force applied by the tapered washer 7 causes V-shape deformation of the projections 5b and the groove 4c formed on the cap 5A and to cause extension in a direction from the outer side of the hose 100 toward the central axis, so that the hose 100 is depressed in a direction toward the central axis, and additionally, the protrusions 2b formed on the tubular member 21 corresponding to the inner member 2 engage with the inner peripheral portion of the hose 100 to prevent removal of the hose 100. In addition, due to the extension of the projections 5b, the irregular portion 5d may engage with the outer periphery of the hose 100 to prevent removal of the hose 100.

The connection of the hose according to this arrangement is made in substantially the same manner as the first embodiment, and therefore, the description will be omitted.

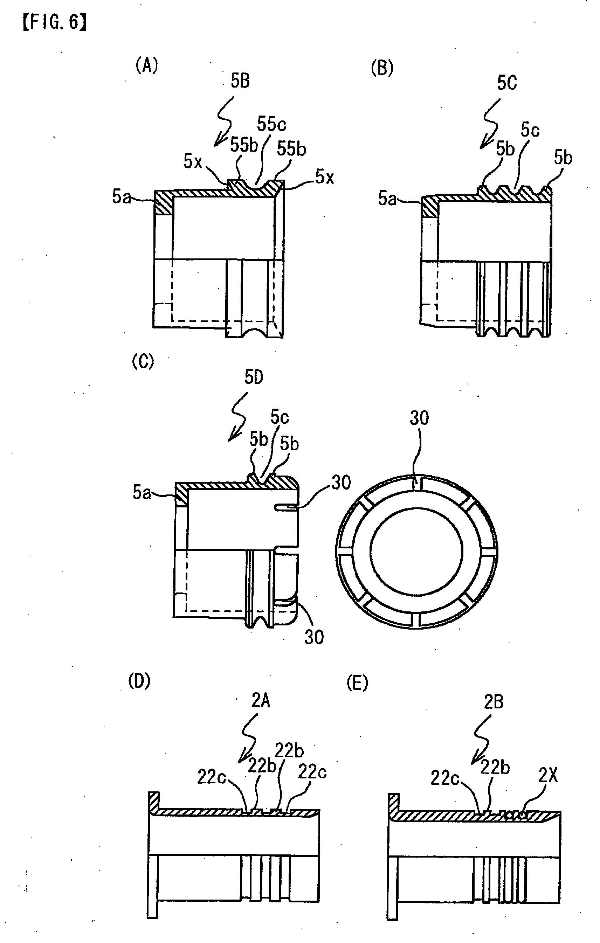

Next, a cap and an inner member having different construction from those described above are shown FIG. 6.

In FIG. 6(A), a cap 5B is shown with a partial cross sectional view. Although this cap 5B has a recessed groove 55c formed between projections 55b, it is different from the cap 5 shown in FIG. 2 in that it is characterized in the cross sectional configurations of a pair of the projections 55b formed on the outer periphery.

In addition, on the right end portion of the projection 55b on the side of the inlet, an inclined portion 5x oriented toward the center and toward the inner side is formed, so that the projection 55b has a substantially inverted trapezoidal configuration. Additionally, on the left side of another projection 55b, an inclined portion 5x oriented toward the center and toward the inlet is formed. Thus, the inclined portions 5x are formed on opposite end portions of the cap 5B or on the right-side projection 55b and on the left-side projection 55b, and the inclined portions 5x are configured to be symmetrical with respect to a Y-axis (vertical line) passing through the center of the recessed groove 55c.

In this way, by forming the inclined portions 5x on opposite sides of the cap 5B and by providing the tapered washer 7 and the nipple 1 configured to conform to the inclined portions 5x, it is possible to provide more close contact in order to prevent leakage. Here, the inclined portions 5x on one side may suffice.

Next, FIG. 6(B) shows a cap 5C in a partial cross sectional view. The cap 5C is characterized in the number of the projections 5b formed on the outer periphery of the cap 5 and is configured to have four projections 5b. Also, the recessed grooves 5c are formed between the projections 5b.

By forming multiple projections 5b and the grooves 5c on and in the cap 5C, it is possible to further prevent leakage. The number of the projections 5b and the number of the grooves 5c may be suitably chosen depending on the purpose.

FIG. 6(C) shows a cap 5D in a partial cross sectional view and the right side view of the cap 5D.

Similar to the cap 5 shown in FIG. 2, on the outer periphery of the cap 5D, a pair of the projections 5b are formed and the recess 5c is formed therebetween. The cap 5D is characterized in that slits 30 having a length to extend from the inlet into inside by a small distance are formed, in a group of eight, around the outer periphery of the right end portion. The number of the slits 30 to be formed can be selectively determined.

By forming the slits 30 in the left direction from the right end portion of the cap 5D, the right end portion of the cap 5D can easily constrict in the direction of the inner diameter when the right end portion of the cap 5D has pressed the tapered washer 7 in the axial direction via the cap nut 10. Therefore, it is possible to easily tighten the outer periphery of the hose 100, and it is possible to improve the removal preventing performance. Here, the inclined portions 5x formed on the cap 5B may be formed also on the cap 5D.

FIG. 6(D) is a view of an inner member 2A with a partial cross section. This inner member 2A is different in configuration from the protrusions 2b and the groove 2c formed in the inner member 2 shown in FIG. 2. Here, protrusions 22b and grooves 22c formed on and in the inner member 2A have rectangular cross sections.

In this way, although the configurations of the protrusions 22b and the grooves 22c formed on and in the inner member 2A may have various cross sectional configurations that may enable engagement with the hose 100, the rectangular configurations of the protrusions 22b and the grooves 22c may be formed differently depending on the purpose of use.

FIG. 6(E) is a view of an inner member 2B with a partial cross section, and this inner member 2B is different from the inner member 2 with protrusions 2b and grooves 2c shown in FIG. 2.

Although a plurality of protrusions 22b and grooves 22c are formed on the outer periphery of the inner member 2B, O-rings 2X are inserted into some of the grooves 22c. Here, the grooves 22c, into which the O-rings 2X are inserted, are configured to be deeper.

In the state where the O-rings 2X are inserted into the grooves 22c, they do not protrude from the outer periphery of the inner member 2B and are planer therewith.

With the inner member 2B having the O-rings 2X pre-mounted thereto in this way, it is possible to easily mount and it is possible to improve the leakage preventing performance.

The connectors constructed as described above are not limited to the constructions of the embodiments, but may be configured by suitably combining the configurations of the components of the embodiments, for example, by forming either or both of the inclined portions 5x and the slits 30 in or on the cap. In addition, the number of the protrusions and the grooves and their configurations may be suitable chosen depending on an object to be applied.

Further, although the hose has been described as being made of resin, it is possible to use various kinds of hoses (including tubes), such as a hollow hose made of synthetic resin and having a resin portion, about which a spring made of a wire or hard resin is wound, and a hose covered with a net, etc.

## Claims

1. A connector for connecting a hose, comprising a nipple, into which the hose can be inserted, a cap nut engaging the nipple, wherein the cap nut, a tapered washer, a cap and an inner member constituting connector components within said nipple are preset to an end portion of the hose, and the hose with the connector components set is inserted into said nipple and is tightened through engagement between the nipple and the cap nut, **characterized in that**:
projections are formed on an outer periphery of said cap and a groove is formed between the projections; and
a protrusion that can engage with an inner periphery of the hose is formed on the inner member or a tubular member in a position corresponding to the projections formed on the outer periphery of the cap.

2. The connector for connecting a hose as defined in claim 1, **characterized in that** the tubular member extends on the right side of the nipple so as to be able to be fitted with an inner diameter of the hose, and an insertion hole, into which the hose can be inserted, is formed in an outer peripheral side of the tubular member, so that the inner member is formed integrally with the nipple.

3. The connector for connecting a hose as defined in claim 1 or 2, **characterized in that** an irregular portion that can engage with an outer periphery of the hose is formed on an inner periphery of the cap in a position corresponding to the projections formed on the outer periphery of the cap.

4. The connector for connecting a hose as defined in any one of claims 1 to 3, **characterized in that** a tapered portion having a bore diameter narrowing in a left direction along a central axis is formed on the middle of the inner periphery of the nipple, into which said hose can be inserted.

5. The connector for connecting a hose as defined in any one of claims 1 to 4, wherein a flange portion is formed on the left side of the inner member, and a groove for an O-ring is formed in the flange portion.

6. A connector for connecting a hose, comprising a nipple, into which the hose can be inserted, a cap nut engaging the nipple, wherein the cap nut, a tapered washer, a cap and an inner member constituting connector components within said nipple are preset to an end portion of the hose, and the hose with the connector components set is inserted into said nipple and is tightened through engagement between the nipple and the cap nut, **characterized in that**:
projections are formed on an outer periphery of said cap and a groove is formed between the projections; and
there is performed at least one of forming an inclined portion on an end portion of the cap and forming slits, which have a length to extend from an inlet into inside by a small distance, around the outer periphery of a right end portion of the cap.

7. A connector for connecting a hose, comprising a nipple, into which the hose can be inserted, a cap nut engaging the nipple, wherein the cap nut, a tapered washer, a cap and an inner member constituting connector components within said nipple are preset to an end portion of the hose, and the hose with the connector components set is inserted into said nipple and is tightened through engagement between the nipple and the cap nut, **characterized in that**:
projections are formed on an outer periphery of said cap and a groove is formed between the projections; and
a rectangular cross sectional groove and protrusions are formed in and on said inner member.
